# EUROPÄISCHE PATENTSCHRIFT

(11) **EP 3 139 575 B1**
(45) Veröffentlichungstag und Bekanntmachung des Hinweises auf die Patenterteilung: **11.04.2018**
(21) Anmeldenummer: 16183915.4
(22) Anmeldetag: 12.08.2016
(51) Int. Cl.: H04L 29/12, H04L 12/24

(54) **ADRESSIERUNGSVERFAHREN FÜR GEBÄUDETECHNIKGERÄTEBUSTEILNEHMER**
ADDRESSING METHOD FOR BUILDING TECHNOLOGY BUS PARTICIPANTS
PROCÉDÉ D'ADRESSAGE POUR PARTICIPANT DE BUS D'APPAREIL TECHNIQUE DE BATIMENT

(30) Priorität: 03.09.2015 DE 102015216850
(43) Veröffentlichungstag der Anmeldung: 08.03.2017
(73) Patentinhaber: Tridonic GmbH & Co KG, 6851 Dornbirn (AT)
(72) Erfinder: KOCH, Patrik Yves, 88085 Langenargen (DE)
(74) Vertreter: Rupp, Christian

(56) Entgegenhaltungen:
- US-A1- 2006 277 309
- Dali Ag: "Digital Addressable Lighting Interface", , 27. Juni 2013 (2013-06-27), XP055337010, Gefunden im Internet: URL:https://web.archive.org/web/2013062701 2349/http://www.dali-ag.org:80/c/manual_gb .pdf [gefunden am 2017-01-19]

## Beschreibung

Die vorliegende Erfindung bezieht sich auf ein Adressierungsverfahren für Busteilnehmer eines Busses für Gebäudetechnikgeräte und insbesondere Betriebsgeräte für Leuchtmittel, wobei die Busteilnehmer über den Bus mit wenigstens einer Steuereinheit verbunden sind. Die Erfindung betrifft weiter eine Steuereinheit für ein solches Adressierungsverfahren sowie wenigstens einen Busteilnehmer und ein Bussystem mit einer solchen Steuereinheit und wenigstens einem solchen Busteilnehmer.

Insbesondere bezieht sich die Erfindung auf die Vergabe von Betriebsadressen für Betriebsgeräte für Leuchtmittel und insbesondere Betriebsgeräte, die für den DALI- oder DSI-Standard ausgebildet und dazu kompatibel sind. Die Betriebsgeräte bzw. Busteilnehmer können die auf dem DALI- bzw. DSI-Protokoll basierenden Befehle empfangen und auswerten. Genauer gesagt bezieht sich die Erfindung darauf, dass eine Steuereinheit eine durch einen Zufallsgenerator an einen Busteilnehmer zugewiesene vorläufige oder zufällig erzeugte Adresse ermittelt, um schließlich dem Busteilnehmer eine weitere Adresse, insbesondere eine Betriebsadressen bzw. DALI- bzw. DSI-Kurzadresse, zuzuweisen.

Bekannt ist dabei der DALI-Standard selbst und auch die Anmeldung WO 95/14972 A1.

Die Druckschrift US 2006/0277309 A1 offenbart ein Verfahren und System zur Entdeckung von Antennenleitungsgeräten und eine im Internet unter der URL "https://web.archive.org/web/20130627012349/http://www.dali-ag.org:80/c/manual_gb.pdf" gefundene Bedienungsanleitung der DALI AG offenbart Informationen zum Digital Addressable Lighting Interface (DALI).

Zu Beginn des Adressierungsverfahrens weist sich jeder Busteilnehmer an dem Bus selbst eine durch einen Zufalls- oder Pseudozufallsgenerator erzeugte Adresse zu. Dabei kann jeder Busteilnehmer entweder selbst einen solchen

Zufallsgenerator aufweisen, um eine entsprechende Adresse zu erzeugen oder die entsprechende vorläufige Adresse kann über einen zentralen Zufallsgenerator dem Busteilnehmer extern zugeführt werden. Die zufällig erzeugte Adresse wird im Folgenden auch als vorläufige Adresse bezeichnet.

Danach startet gemäß dem Stand der Technik eine Steuerung eine Abfrage gemäß einem vorgegebenen Suchalgorithmus und fragt dabei ab, ob mit Bezug auf eine Suchadresse an dem Bus Busteilnehmer angeschlossen sind, die eine vorläufige Adresse aufweisen, die kleiner ist als die Suchadresse, bzw. in einem Adresssuchraum liegt, der durch die Suchadresse und eine Grenze des Adresssuchraums (z.B. eines Adresssuchraums einer vorhergehenden Suche) gebildet wird. Dabei ist es von Bedeutung, dass die Antwort der Busteilnehmer, bei denen es sich auch um Sensoren oder Aktoren handeln kann bzw. um Betriebsgeräte zu einer Steuerung solcher Sensoren und Aktoren (z.B. Motoren, akustische Signalgeber, ...) auf die Suchanfrage hin an die Steuereinheit übermittelt wird.

Hierbei handelt es sich um eine qualitative Antwort, nämlich entweder um eine kodierte Information, die angibt, dass ein Busteilnehmer in dem abgefragten Adresssuchbereich liegt (beispielsweise "JA"/"YES", kodiert durch den Hexadezimalwert "FF", bei der der Pegel an dem Bus entsprechend verändert wird). Andernfalls erfolgt keine Rückmeldung, der Pegel an dem Bus bleibt unverändert, zum Beispiel hoch, was (auch als Kodierung von "NEIN") ausgewertet werden kann.

Dabei ist zu bemerken, dass gemäß des Standes der Technik die Suche so lang erfolgt, bis der Busteilnehmer mit der kleinsten/größten Adresse eindeutig ermittelt wurde. Da hier die genaue Übereinstimmung der Suchadresse mit der Adresse des Busteilnehmers anzeigt, dass die entsprechende Adresse gefunden wurde, sind mehrere Iterationen der Durchführung der Suche notwendig, bis zu der Adresse des Busteilnehmers gelangt wird, selbst wenn bereits nur ein Busteilnehmer auf die Suche geantwortet hat.

Die Erfindung macht es sich daher zur Aufgabe, die Adresssuche zu beschleunigen. Dabei ist zentraler Punkt der Erfindung, dass die Antwort der Busteilnehmer nicht nur rein qualitativ, sondern quantitativer Natur ist, und so jeder Busteilnehmer insbesondere antwortet, wie groß der Abstand zwischen der von der Steuereinheit ausgegebenen Suchadresse und der Adresse ist, die ihm zugewiesen wurde, bzw. direkt mit seiner zugewiesenen Busadresse antwortet.

Der Kern der Erfindung ist Gegenstand der unabhängigen Ansprüche, Weiterbildungen der Erfindung sind Gegenstand der abhängigen Ansprüche.

In einem ersten Aspekt wird ein Adressierungsverfahren für Busteilnehmer eines Busses für Gebäudetechnikgeräte, insbesondere Betriebsgeräte für Leuchtmittel, bereitgestellt, wobei die Busteilnehmer über den Bus mit wenigstens einer Steuereinheit verbunden sind, aufweisend die Schritte:
A.) die Busteilnehmer weisen sich jeweils intern eine zufällig erzeugte Adresse zu oder werden mit einer solchen von extern versehen,
B.) die Steuereinheit führt eine Suche in einem Adresssuchraum durch und sendet eine Suchadresse, die den Adresssuchraum begrenzt,
C.) jeder Busteilnehmer, dessen zufällig erzeugte Adresse in dem Adresssuchraum liegt, sendet auf das Signal hin eine Antwort an die Steuereinheit,
D.) die Steuereinheit verkleinert den Adresssuchraum und führt die Schritte B.) bis D.) durch, bis im Schritt C.) nur ein Busteilnehmer antwortet. In Schritt C.) sendet jeder Busteilnehmer mit seiner Antwort eine Adressdifferenzinformation, die angibt, wie weit seine Adresse von der Suchadresse entfernt ist, insbesondere über den Bus an die Steuereinheit.

Die Steuereinheit ermittelt die zufällig erzeugte Adresse des Busteilnehmers aus der Suchadresse und der Adressdifferenzinformation. Die Steuereinheit weist dem Bussteilnehmer eine weitere Adresse zu. Die weitere Adresse kann eine Betriebsadresse eines Beleuchtungsbussystems sein.

Hierbei ist der Bus ein DALI- oder DSI-Bus, und die weitere Adresse ist eine DALI- oder DSI-Kurzadresse.

Die Steuereinheit kann die Suche nach dem Busteilnehmer mit der kleinsten oder größten zufällig erzeugte Adresse durchführen.

Jeder Busteilnehmer kann einen Zufalls- oder Pseudozufallszahlengenerator aufweisen und damit die zufällig erzeugte Adresse erzeugen.

Die Steuereinheit kann die Suchadresse in Schritt D.), wenn die Steuereinheit keine Antwort empfängt, vergrößern.

Die zufällig erzeugte Adresse kann aus mehreren, insbesondere drei Bytes bestehen. Die Steuereinheit kann die Schritte B.) bis D.) für jedes Byte durchführen.

Die Antwort kann eine Typinformation aufweisen, die angibt, für welches Byte die Adressdifferenzinformation gilt.

Die Busteilnehmer können Sensoren und/oder Aktuatoren sein.

Das Signal kann ein Broadcast-Signal sein, das insbesondere an alle Busteilnehmer gesendet wird.

Die Steuereinheit kann unterscheiden ob keine Antwort oder ob die Antwort von einem oder mehreren Busteilnehmern empfangen wurde.

Der Bus ist ein DALI- oder DSI-Bus. Die weitere Adresse ist eine DALI- oder DSI-Kurzadresse.

In einem weiteren Aspekt wird eine Steuereinheit für Busteilnehmer eines Busses für Gebäudetechnikgeräte, insbesondere Betriebsgeräte für Leuchtmittel, bereitgestellt, wobei die Steuereinheit mit den Busteilnehmern über den Bus verbunden ist und dazu eingerichtet ist, eine Suche in einem Adresssuchraum in einem Schritt A.) durchzuführen und eine Suchadresse, die den Adresssuchraum begrenzt, zu senden und eine Antwort von jedem Busteilnehmer zu empfangen, dessen zufällig erzeugte Adresse in dem Adresssuchraum liegt, und die weiter dazu eingerichtet ist, den Adresssuchraum in einem Schritt B.) zu verkleinern und die Schritte A.) bis B.) durchzuführen, bis nur ein Busteilnehmer antwortet. Die Steuereinheit empfängt in der Antwort eine Adressdifferenzinformation, die angibt, wie weit eine zufällig erzeugte Adresse eines Busteilnehmers von der Suchadresse entfernt ist, und/oder wertet sie aus.

Die zufällig erzeugte Adresse eines Busteilnehmers wird aus der Suchadresse und der Adressdifferenzinformation ermittelt. Dem Bussteilnehmer wird eine weitere Adresse zugewiesen.

Hierbei ist der Bus ein DALI- oder DSI-Bus, und die weitere Adresse ist eine DALI- oder DSI-Kurzadresse.

In noch einem weiteren Aspekt wird ein Busteilnehmer, insbesondere ein Betriebsgerät für Leuchtmittel, bereitgestellt, wobei der Busteilnehmer über den Bus mit wenigstens einer Steuereinheit verbunden ist und sich intern eine zufällig erzeugte Adresse zuweist oder eine solche von extern empfängt und sich zuweist, und auf ein Signal hin, aufweisend eine Suchadresse, die einen Adresssuchraum begrenzt, eine Antwort an die Steuereinheit sendet, wenn die zufällig erzeugte Adresse in dem Adresssuchraum liegt. Der Busteilnehmer sendet mit seiner Antwort eine Adressdifferenzinformation an die Steuereinheit, die angibt, wie weit seine zufällig erzeugte Adresse von der Suchadresse entfernt ist. Hierbei ist der Busteilnehmer dazu eingerichtet, von der Steuereinheit eine weitere Adresse zugewiesen zu bekommen, wobei die Steuereinheit dazu ausgelegt ist, die zufällig erzeugte Adresse des Busteilnehmers aus der Suchadresse und der Adressdifferenzinformation zu ermitteln, wobei der Bus ein DALI- oder DSI-Bus ist, und wobei die weitere Adresse eine DALI- oder DSI-Kurzadresse ist.

In wiederum einem weiteren Aspekt wird ein Bussystem aufweisend mehrere Busteilnehmer für Gebäudetechnikgeräte, insbesondere Betriebsgeräte für Leuchtmittel, bereitgestellt, wobei die Busteilnehmer über den Bus mit wenigstens einer Steuereinheit verbunden sind und sich in einem Schritt A.) jeweils intern eine zufällig erzeugte Adresse zuweisen oder mit einer solchen von extern versehen werden, die Steuereinheit in einem Schritt B.) eine Suche in einem Adresssuchraum durchführt und eine Suchadresse sendet, die den Adresssuchraum begrenzt, wobei jeder Busteilnehmer, dessen zufällig erzeugte Adresse in dem Adresssuchraum liegt, auf das Signal hin in einem Schritt C.) eine Antwort an die Steuereinheit sendet, und wobei die Steuereinheit den Adresssuchraum in einem Schritt D.) verkleinert und die Schritte B.) bis D.) durchführt, bis im Schritt C.) nur ein Busteilnehmer antwortet.

Jeder Busteilnehmer sendet in Schritt C) mit seiner Antwort eine Adressdifferenzinformation, die angibt, wie weit seine Adresse von der Suchadresse entfernt ist.

Die Steuereinheit ermittelt die zufällig erzeugte Adresse eines Busteilnehmers aus der Suchadresse und der Adressdifferenzinformation und weist dem Bussteilnehmer eine weitere Adresse zu.

Hierbei ist der Bus ein DALI- oder DSI-Bus, und die weitere Adresse ist eine DALI- oder DSI-Kurzadresse.

Die Erfindung wird nunmehr auch mit Blick auf die Figuren beschrieben.
- Fig. 1: zeigt einen Überblick über ein erfindungsgemäßes Bussystem.
- Fig. 2: zeigt schematisch einen Ablauf der Busteilnehmersuche,
- Fig. 3: zeigt exemplarisch alternative eine Suche nach Busteilnehmern.
- Fig. 4: illustriert exemplarisch das erfinderische Verfahren in einem Flussdiagram.

Ein bekanntes Verfahren zur Adressierung von Busteilnehmern ist insbesondere in dem Standard IEC62386-102 beschrieben, der auf der Generierung von 24 Bit Zufallszahlen beruht.

Zum Beispiel soll gemäß im DALI-Standard durch iterative Annäherung ein Busteilnehmer mit der niedrigsten Zufallszahl ausgewählt werden. Ist der Busteilnehmer gefunden, so wird ihm eine Kurzadresse zugewiesen und der Busteilnehmer wird aus der nachfolgenden Suche ausgeschlossen. Die Suche beginnt anschließend von Neuem und es wird wiederum der Busteilnehmer mit der kleinsten Adresse gesucht.

Dabei erfolgt die Suche durch Vorgabe einer Suchzahl, insbesondere einer 24 Bit-Suchzahl (in hexadezimalschreibweise z.B. FF FF FF, oder 0xFFFFFF, was 3 mal 8 Bit und somit 3 Byte entspricht), die an alle Busteilnehmer übermittelt wird (z.B. als Broadcast-Signal). Falls ein Busteilnehmer eine vorläufige Adresse oder Zufallszahl aufweist, die kleiner oder gleich der Suchadresse ist, so antwortet es auf die Suchanfrage, indem es eine Antwort an die Steuereinheit übermittelt. Weist der Busteilnehmer eine vorläufige Adresse auf, die größer als die Suchadresse ist, so antwortet er nicht.

Die Steuereinheit unterscheidet nun, ob kein Busteilnehmer, genau ein Busteilnehmer, oder ob mehrere Busteilnehmer auf die Suchanfrage antworten. Antworten mehrere Busteilnehmer, so verändert die Steuereinheit die Suchzahl und zwar insbesondere so, dass der Adresssuchbereich, der von der vorhergehenden Suchzahl und einer Grenze des Adresssuchraums gebildet wird, im Wesentlichen halbiert wird. Beispielsweise wird die Suche, die mit der Hexadezimalzahl FF (für 0xFF) (für ein Byte) beginnt, mit der Hexadezimalzahl 7F fortgesetzt, d.h. der Adresssuchraum von 0xFF bis 0x00 bzw 255 bis 0 wird verkleinert auf den Adresssuchraum vom 0x7F bis 0x00, also 127 bis 0, und somit um dezimal 128 verkleinert. Melden sich hier mehrere Busteilnehmer, wird die Suche mit 0x3F fortgesetzt, was um eine Halbierung um dezimal 64 entspricht. Im Beispiel wird die Suche dann mit 0x1F fortgesetzt (Verkleinerung um dezimal 32).

Antwortet kein Gerät, so wird der Adresssuchraum vergrößert, um anschließend mit dem vergrößerten Adresssuchraums Busteilnehmer zu suchen. Antwortet z.B. bei der Suche mit OxlF, in Fortsetzung des vorigen Beispiels, kein Busteilnehmer, so wird der Adresssuchraum um die Hälfte des Adresssuchraums der vorigen Suche vergößert, bzw. die Suchzahl erhöht. Im Beispiel wurde die Suchzahl um dezimal 32 verkleinert. Somit wird die Suchzahl auf 0x2F (um dezimal 16) erhöht.

Antwortet lediglich ein Gerät auf die Suchanfrage, so wird die Suche so lange weitergeführt (Veränderung der Suchzahl, bzw. Verkleinerung/Vergrößerung des Suchraums), bis eine genaue Übereinstimmung der Suchadresse mit der vorläufigen Busteilnehmeradresse erreicht wurde. Das Gerät mit der kleinsten vorläufigen Adresse ist dann ermittelt und eine weitere Adresse, z.B. eine DALI-Kurzadresse, kann dem Gerät durch die Steuereinheit zugewiesen werden.

Vorzugsweise erfolgt die iterative Annäherung der Suchadresse an die vorläufige Adresse eines Busteilnehmers dabei Byte-weise, indem eine Suche für ein HI-, ein MI-, und ein LO-Byte der vorläufigen Adresse separat erfolgt.

Ein Beispiel einer Suche für ein Byte, also einem Teil der vorläufigen Adresse, mit Wert 3F kann dann ausgehend von der Suchzahl FF erfolgen wie folgt:

| Suchzahl (hexadezimal) | Dez. Wert | Veränderung der Suchzahl | Antworten | Schritte |
|---|---|---|---|---|
| FF | 255 | | >1 | |
| 7F | 127 | -128 | >1 | 1 |
| 3F | 63 | -64 | >1 | 2 |
| 1F | 31 | -32 | 0 | 3 |
| 2F | 47 | 16 | 0 | 4 |
| 37 | 55 | 8 | 0 | 5 |
| 3B | 59 | 4 | 0 | 6 |
| 3D | 61 | 2 | 0 | 7 |
| 3E | 62 | 1 | 0 | 8 |
| 3F | 63 | 1 | 1 | gefunden |

Somit ist die Zeitspanne zum Auffinden eines Busteilnehmers immer fest, da immer dieselbe Anzahl von Suchanfragen erforderlich ist, bis eine vorläufige Adresse eines Busteilnehmers (kleinste vorläufige Adresse) aufgefunden ist. Diese berechnet sich zu 3x8 Schritte für die 3 Byte bei einer 24 Bit-Adresse.

Falls bereits nach einem früheren Schnitt nur noch ein Busteilnehmer antwortet, so ist es dennoch erforderlich, dass alle verbleibenden Abfrageschritte durchgeführt werden, bis die Suchadresse und die vorläufige Adresse des Busteilnehmers genau übereinstimmen. Der Busteilnehmer gilt dann als "ausgewählt".

Es ergibt sich damit ein zeitaufwendiges Verfahren, wobei die Anpassung der Suchadresse und der Abfrage im beispielhaften DALI-Bussystem je zwei Nachrichten benötigen. Somit ergibt sich eine Zeit von je ungefähr 25ms und damit ca. 50ms für jeden Schritt der 24 Suchschritte, was eine Gesamtzahl von ca. 1,2s je Busteilnehmer beansprucht.

Gemäß der vorliegenden Erfindung wird nun die Suche so modifiziert, dass jeder Busteilnehmer einen Abstand zwischen der Suchzahl und seiner vorläufigen Adresse, also eine Adressdifferenzinformation, insbesondere für jedes Byte (HI, MI, LO) auf eine Abfrage der Steuereinheit hin an die Steuereinheit übermittelt. Antwortet auf die Suchanfrage hin mehr als ein Gerät, so erfolgt die Suche wie aus dem Stand der Technik bekannt, da die Steuereinheit gleichzeitige Antworten mehrerer Teilnehmer nicht unabhängig voneinander auswerten kann.

Sobald jedoch lediglich ein Gerät auf eine Suchanfrage antwortet, kann aufgrund der übertragenen Adressdifferenzinformation, die den Abstand der vorläufigen Adresse eines Busteilnehmers zu der Suchadresse angibt, sofort die Adresse des Busteilnehmers mit der kleinsten/größten vorläufigen Adresse bestimmt werden. Durch Kenntnis des Abstands insbesondere des Byte-Werts, für das Byte, für das die Suche durchgeführt wird, von dem entsprechenden Byte der vorläufigen Adresse, können die restlichen Abfrageschritte durch die Steuereinheit übersprungen werden und die Suchzahl kann direkt auf den Wert der vorläufigen Adresse bzw. auf den Wert des entsprechenden Bytes der vorläufigen Adresse eingestellt werden. Hieraus ergibt sich eine signifikante Zeitersparnis. Auch hier kann, wie bereits angedeutet, die Suche Byte-weise erfolgen, d.h. getrennt für jedes Byte (HI, MI, LO).

Anschließend kann, wie ebenfalls aus dem Stand der Technik bekannt, eine Zuweisung einer weiteren Adresse, insbesondere einer DALI-Kurzadresse erfolgen.

Neben der Adressdifferenzinformation kann der wenigstens eine Busteilnehmer auch noch eine Information bezüglich des Byte-Typs übermitteln, für den die Adressdifferenzinformation gilt. Hierdurch kann eine sicherere Übertragung bzw. eine zuverlässigere Auswertung auf Seiten der Steuereinheit erfolgen, da klar ist, für welchen Byte-Typ die Adressdifferenzinformation übermittelt wird.

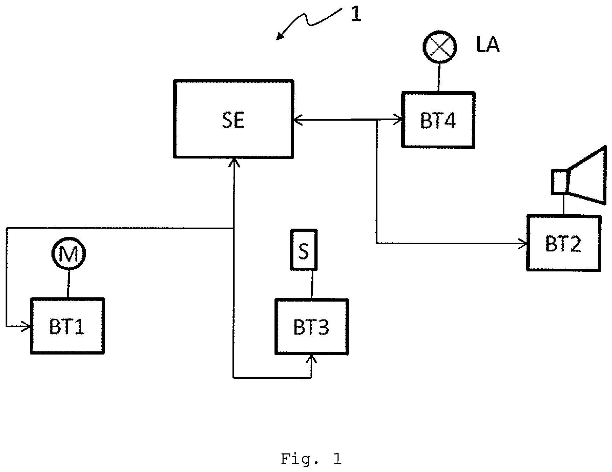

Fig. 1 zeigt dabei ein Bussystem 1, wie es für die Erfindung exemplarisch ist. Darin ist eine Steuereinheit SE gezeigt, die über einen oder mehrere Busse mit Busteilnehmern BT1-BT4 verbunden ist. Die Busteilnehmer können dabei insbesondere Betriebsgeräte für Aktoren oder Sensoren sein. Beispielsweise kann der Busteilnehmer BT1 ein Betriebsgerät sein, das einen Motor M betreibt. Der Busteilnehmer BT2 kann zum Beispiel einen akustischen Signalgeber betreiben, während der Busteilnehmer BT3 Informationen eines Sensors S auswerten, verarbeitet und versenden kann. Der Busteilnehmer BT4 kann schließlich ein Betriebsgerät zum Betrieb eines Leuchtmittels sein.

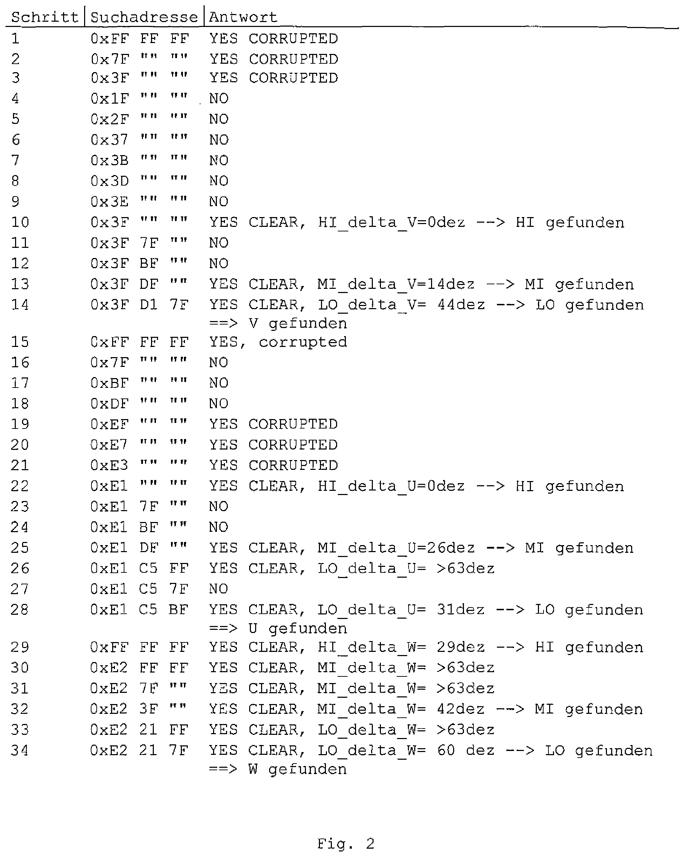

Fig. 2 zeigt nun ein exemplarisches Verfahren, bei dem eine Suche durchgeführt wird und die Busteilnehmer sowohl mit einer Adressdifferenzinformation als auch mit einer Byte-Typ-Information antworten.

Dabei enthält die Antwort beispielsweise eine Kodierung 0bCC BBBBBB, wobei BBBBBB eine Adressdifferenzinformation darstellt, die eine Differenz von der vorläufigen Adresse zu der Suchadresse anzeigt, insbesondere als Binärzahl. Beispielsweise steht binär 111111 (= dezimal 63) dabei für eine Differenz von mehr als 63 in Dezimalschreibweise. Die Kodierung 0bCC kann den Byte-Typ angeben und damit, ob die Adressdifferenzinformation BBBBBB eine Abweichung für das HI-, MI, oder LO-Byte angibt. Beispielsweise kann eine Kodierung 0b00 die Adressdifferenzinformation für das LO-Byte angeben, während die Kodierungen 0b01 bzw. 0b10 definieren, dass die Adressdifferenzinformation sich auf das MI-Byte bzw. das HI-Byte beziehen.

Exemplarisch startet die Suche nun mit der Suchadresse 0xFF FF FF (angegeben in Hexadezimalschreibweise, die der Dezimalschreibweise 255, 255, 255 entspricht, womit jeweils256 Werte (inklusive der 0) kodiert sind). Die Busteilnehmer antworten nun auf eine Suchanfrage immer dann, wenn ihre vorläufige Adresse kleiner ist als die Suchadresse. Sie übermitteln dabei ein kodiertes "JA" und geben an, wie weit ihre vorläufige Adresse von der Suchadresse abweicht.

Dabei können sie beispielsweise mit einer Differenz von 111111 antworten, um anzuzeigen, dass die Abweichung (>63) so groß ist, dass diese nicht in der zur Verfügung stehenden Anzahl von Bits kodiert werden kann. Solange nun mehrere Busteilnehmer antworten, entspricht die Suche der aus dem Stand der Technik.

Sobald jedoch nur noch ein Busteilnehmer antwortet, erhält die Steuereinheit über die Antwort des Busteilnehmers eine Angabe darüber, wie weit die Suchadresse von der vorläufigen Adresse des Busteilnehmers entfernt ist. Im nächsten Schritt kann dann direkt die vorläufige Adresse des Busteilnehmers als Suchadresse gewählt werden. Damit werden die Schritte der iterativen Annäherung an die vorläufige Adresse des Busteilnehmers gespart.

In Fig. 2 ist ein Beispiel gezeigt, in dem drei Busteilnehmer gesucht werden. Dabei steht in der Spalte "Suchadresse" jeweils die verwendete Suchadresse und in der Spalte "Antwort" jeweils die von der Steuereinheit empfangenen Antworten. Dabei steht "YES CORRUPTED" dafür, dass sich mehrere Antworten von Busteilnehmern überlagern und somit kein einzelner Busteilnehmer identifiziert werden kann.

"YES CLEAR" steht andererseits dafür, dass eine eindeutige Zuweisung der Byte-weisen Suche durch Angabe des Byte-Typs (HI, MI oder LO) ermittelt werden kann, basierend auf der Adressdifferenzinformation. In dem Beispiel ist ein Busteilnehmer U mit einer Adresse 0xE1 C5 A1, ein Busteilnehmer V mit der Adresse 0x3F D1 53 und ein Busteilnehmer W mit der Adresse 0xE2 21 43 gezeigt.

Wie in Fig. 2 gezeigt, startet also die Suche mit der Adresse 0xFF FF FF, wobei zunächst nur das erste Byte beachtet wird. Da im Schritt 1 zunächst mehrere, nämlich alle, Busteilnehmer antworten, da die hexadezimale Adresse der Busteilnehmer jeweils kleiner ist als 0xFF, ist die Antwort "YES CORRPUTED", da sich die Antworten der Busteilnehmer an die Steuereinheit überlagern.

Der Adresssuchraum wird somit durch die Wahl einer neuen Suchadresse halbiert, indem als Suchadresse nun die Suchadresse 0x7F FF FF verwendet wird. Auch hier melden sich wiederum mehrere Busteilnehmer, da auch hier sämtliche Adressen für das Byte HI kleinere Werte aufweisen. Somit wird der Suchraum durch die Wahl einer neuen Suchadresse weiter verkleinert, indem die Adresse 0x3F FF FF als Suchadresse gewählt wird. Indem erneut eine kleinere Suchadresse 0x1F FF FF gewählt wird, antwortet nun kein Busteilnehmer mehr, da sämtliche HI-Byte-Werte der Busteilnehmeradressen größer sind als die Suchadresse für dieses Byte. Daraufhin wird der Wert der Suchadresse sukzessive erhöht und insbesondere um die Hälfte der Differenz der Suchadresse zu der vorigen Suchadresse.

Es erfolgt somit eine Anzahl von Schritten, in denen die Suchadresse sukzessive in ihrem Wert wieder erhöht wird, und so eine Annäherung an die Adresse eines Busteilnehmers von "unten her" erfolgt.

Im Schritt 10 der Fig. 2 wird schließlich ein Busteilnehmer mit dem Wert 3F für das HI-Byte identifiziert. Die Antwort "HI_delta_V=0dez" des Busteilnehmers V gibt an, dass ein Differenzwert von dezimal 0 zu der Suchadresse vorliegt für das HI-Byte, womit das Byte eindeutig identifiziert ist.

Es erfolgt nun die Suche für das zweite Byte der vorläufigen Adresse, wobei wiederum zunächst eine Halbierung des Adresssuchraums erfolgt und, da kein Busteilnehmer antwortet, wiederum eine Erhöhung der Suchadresse (von Schritt 11 auf Schritt 12 in Fig. 2). Nach einer erneuten Erhöhung der Suchadresse von Schritt 12 auf Schritt 13 meldet sich schließlich ein Busteilnehmer, dessen Wert für das MI-Byte lediglich um einen Betrag von dezimal 14 von der Suchadresse abweicht (MI_delta_V=14dez). Hiermit kann der Wert des MI-Bytes durch die Steuereinheit eindeutig bestimmt werden.

Im nächsten Schritt erfolgt eine Suche nach dem Wert des LO-Bytes, die beim Beginn der Suche mit dem Wert 7F für dieses Byte bereits eine eindeutige Antwort liefert. Die Steuereinheit erhält eine Antwort, für das LO-Byte eines Teilnehmers, die angibt, dass die vorläufige Adresse um den Betrag dezimal 44 von der Suchadresse abweicht (LO_delta_V=44dez). Somit kann die Adresse des Busteilnehmers V eindeutig in Schritt 14 bestimmt werden.

Analog läuft die Suche nach den Busteilnehmern U und W, wobei hier zu beachten ist, dass beispielsweise, wie in Schritt 26 gezeigt, die Adressdifferenzinformation keine eindeutige Information über die Abweichung der Suchadresse von der vorläufigen Adresse angibt (die Differenz für das LO-Byte des Busteilnehmers U wird mit >63 als Dezimalwert angegeben, LO_delta_U=>63dez). Die Suche wird dann wie oben beschrieben weiter geführt, bis ein eindeutiger Differenzwert ermittelt wird. Dies ist auch in den Schritten 29 bis 34 für das Betriebsgerät W gezeigt.

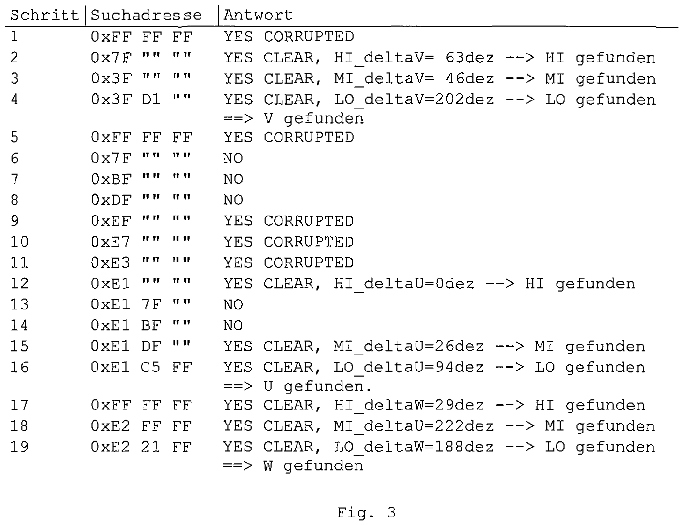

In Fig. 3 ist nun ein Ablaufbeispiel für eine erfindungsgemäße Suche gezeigt, bei der keine Kodierung für die Bytes HI, MI und LO erfolgt.

Dabei bezieht sich die Antwort eines Betriebsgeräts auf die zuletzt veränderte Suchadresse, und, wenn mehrere Bytes der Suchadresse geändert wurden, bevorzugt auf das HI-Byte. Hierdurch wird die Anzahl der Suchen drastisch reduziert und die Anzahl der Bits, die zur Kodierung der Adressdifferenzinformation eingesetzt werden können, steigt auf beispielsweise 8 Bit. So können nunmehr wesentlich größere Abweichungen kodiert werden. Es erfolgt keine Angabe des Bytes in der Antwort sondern es wird nur die Adressdifferenzinformation bezüglich der zuletzt geänderten Suchadresse angegeben.

Für die im vorigen Beispiel bereits genannten Busteilnehmer U, V und W erfolgt dann die Suche wie in Fig. 3 gezeigt:
In Schritt 1 wird wiederum mit der Suchadresse 0xFF FF FF begonnen, was eine Antwort "YES, CORRUPTED" nach sich zieht.

Bereits im zweiten Schritt erhält die Steuereinheit eine Antwort (hier von Teilnehmer V), die eine Adressdifferenzinformation zu der neuen Suchadresse enthält und angibt, dass eine vorläufige Adresse für das High-Byte um den Betrag von dezimal 63 abweicht (HI_deltaV=63dez). Mit der um diesen Betrag geänderten Suchadresse (0x3F) wird im dritten Schritt eine weitere Information von der Steuereinheit erhalten, wonach das MI-Byte der Suchadresse um 46 von der vorläufigen Adresse eines Busteilnehmers abweicht(MI_deltaV=46dez). Die Steuereinheit ändert daraufhin die Adresse für das Byte MI und erhält daraufhin eine Antwort in Schritt 4, dass das LO-Byte eines Busteilnehmers um dezimal 202 abweicht (LO_deltaV=202dez). Damit kann die Steuereinheit die Adresse des Busteilnehmers V eindeutig bestimmen.

In den Schritten 6 bis 11 erfolgt wiederum eine Suche nach beschriebenem Schema, wobei im Schritt 12 schließlich die Steuereinheit eine Adressdifferenzinformation erhält, die anzeigt, dass die Differenz von der Suchadresse zu einer vorläufigen Adresse für das High-Byte 0 ist und somit die High-Byte-Komponente (des Busteilnehmers U) gefunden ist (HI_deltaU=0dez). Anschließend erfolgt eine Suche nach dem MI-Byte in den Schritten 13 bis 15, wobei im Schritt 15 die Differenz der Suchadresse zu der vorläufigen Adresse mit 26 angegeben wird und somit die MI-Byte-Komponente für den Busteilnehmer ausfindig gemacht wurde (MI_deltaU=26dez). Im Schritt 16 kann dann durch die Antwort des Busteilnehmers die Steuereinheit auf die LO-Byte-Komponente des Busteilnehmers schließen und der Busteilnehmer kann so ausfindig gemacht werden (LO_deltaU=94dez).

Anzumerken ist nochmals, dass ein Busteilnehmer, für den bereits eine Adresse bestimmt wurde, an der weiteren Suche nicht teilnimmt.

In den Schritten 17 bis 19 wird noch die Adresse des Busteilnehmers W ausfindig gemacht.

Die Erfindung kann somit die Suche nach Busteilnehmern in einem Gebäudetechnikgerätebus erheblich beschleunigen und bietet somit eine signifikante Verbesserung gegenüber der Suche nach dem Stand der Technik.

Die in Fig. 2 gezeigte Suche ist dabei zuverlässiger, da durch die kodierte Byte-Information zusätzliche Sicherheit gewährt wird.

Alternativ kann statt einer Adressdifferenzinformation ("delta") auch die vorläufige Adresse selbst von den Busteilnehmern an die Steuereinheit übermittelt werden. Sobald nur ein Busteilnehmer antwortet, ist die vorläufige Adresse bestimmt und kann ausgewählt werden bzw. gilt dann als ausgewählt. Die vorgestellten Verfahren erlauben so eine Geschwindigkeitssteigerung um 2x bis 4x.

Es ist dabei zu verstehen, dass, statt nach einer kleinsten vorläufigen Adresse auch nach einer größten vorläufigen Adresse gesucht werden kann. Dabei erfolgt die Suche dann beispielsweise nicht ausgehend von der größtmöglichen Suchadresse, sondern beispielsweise ausgehend von der kleinstmöglichen Suchadresse (z.B. 0x00). Entsprechend antworten dann die Busteilnehmer, die mit ihrer vorläufigen Adresse unterhalb einer Suchadresse liegen, nicht auf eine Anfrage der Steuereinheit, sondern lediglich die Busteilnehmer, die eine größere vorläufige Adresse aufweisen, als die Suchadresse. Antworten keine Busteilnehmer auf die Suchanfrage, so wird auch hier der Adresssuchbereich vergrößert, während bei einer Antwort von mehreren Busteilnehmern der Suchbereich verkleinert wird. Antwortet lediglich ein Busteilnehmer, so wird die Suchadresse auf Basis der Antwort verändert, bis eine Übereinstimmung der Suchadresse mit der vorläufigen Adresse des Busteilnehmers bzw. des entsprechenden Bytes erreicht wurde.

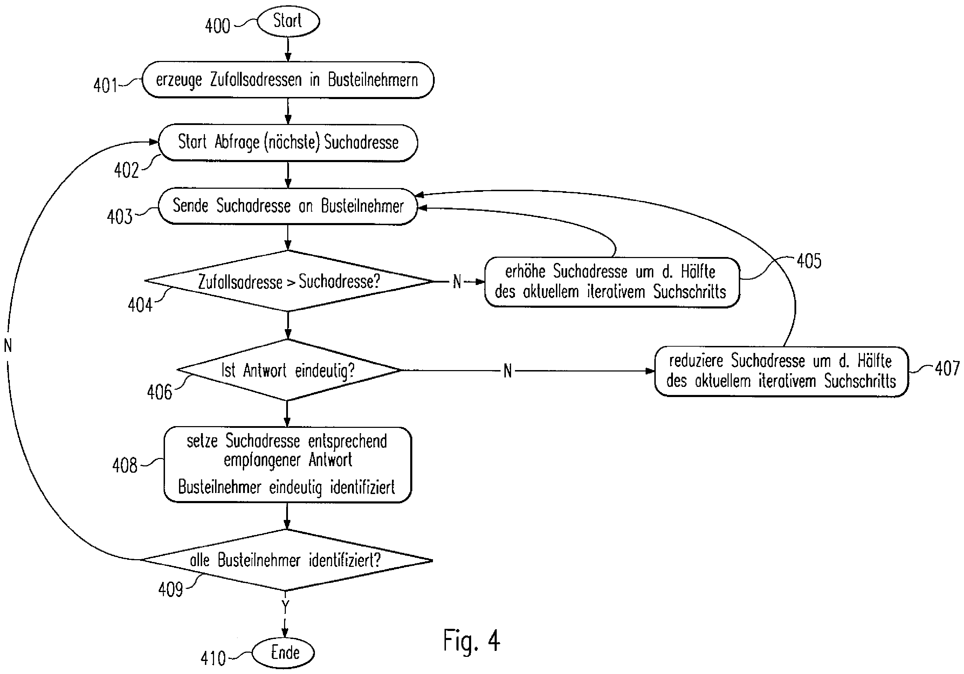

Fig. 4 zeigt schematisch und exemplarisch das erfinderische Verfahren. Ausgehend von einem Start-Zustand 400, in dem vorzugsweise noch keine zufällig erzeugte Adresse an den Busteilnehmern vorliegt, wird in einem ersten Schritt 401 jeweils eine zufällig erzeugte Adresse in den Busteilnehmern erzeugt. In einem zweiten Schritt 402 wird die Suche, wie vorstehend beschrieben, mit einer Suchadresse gestartet. Die Suchadresse wird dann in einem dritten Schritt an die Busteilnehmer gesendet, die dann im vierten Schritt 404 prüfen ob die Suchadresse kleiner ist als ihre zufällig erzeugte Adresse.

Ist dies bei allen Busteilnehmern nicht der Fall (Pfad N ausgehend vom vierten Schritt 404; kein Busteilnehmer sendet Antwort) wird der Adresssuchraum in einem fünften Schritt 405 für eine neue Suche um die Hälfte des Adresssuchraums der aktuellen Suche, bzw. um die Hälfte der Größe einer unmittelbar vorhergehenden Adresssuchraumveränderung, vergrößert. Die Suche wird dann ausgehend von dem dritten Schritt 403 mit dem vergrößerten Adresssuchraum fortgeführt.
Wird hingegen von der Steuereinheit wenigstens eine Antwort empfangen, d.h. die Suchadresse ist kleiner als wenigstens eine zufällig erzeugte Adresse eines Busteilnehmers (Pfad Y ausgehend vom vierten Schritt 404), so wird in einem sechsten Schritt 406 von der Steuereinheit geprüft, ob die Antwort eindeutig ist, d.h. ob lediglich ein Busteilnehmer geantwortet hat.

Ist dies nicht der Fall (Pfad N ausgehend vom sechsten Schritt 406; mehr als ein Busteilnehmer sendet Antwort) wird der Adresssuchraum in einem siebten Schritt 407 für eine neue Suche um die Hälfte des Adresssuchraums der aktuellen Suche, bzw. um die Hälfte der Größe einer unmittelbar vorhergehenden Adresssuchraumveränderung, verkleinert. Die Suche wird dann ausgehend von dem dritten Schritt 403 mit dem verkleinerten Adresssuchraum fortgeführt.

Ist im sechsten Schritt 406 die Antwort eindeutig, so wird in einem achten Schritt 408 die Suchadresse entsprechend der empfangenen Antwort gesetzt und der entsprechende Busteilnehmer ist eindeutig identifiziert.

In einem neunten Schritt wird geprüft, ob alle Busteilnehmer identifiziert sind. Sind alle Busteilnehmer identifiziert (Pfad Y ausgehend vom neunten Schritt 409), so endet die Suche in einem Ende-Zustand 410. Sind nicht alle Busteilnehmer identifiziert (Pfad N ausgehend vom neunten Schritt 409), so wird die Such mit dem zweiten Schritt 402 fortgeführt, bis alle Busteilnehmer identifiziert sind.

## Patentansprüche

1. Adressierungsverfahren für Busteilnehmer (BT1-BT4) eines Busses für Gebäudetechnikgeräte, insbesondere Betriebsgeräte für Leuchtmittel, wobei die Busteilnehmer über den Bus mit wenigstens einer Steuereinheit (SE) verbunden sind,
aufweisend die Schritte:
- A.) die Busteilnehmer (BT1-BT4) weisen sich jeweils intern eine zufällig erzeugte Adresse zu oder werden mit einer solchen von extern versehen,
- B.) die Steuereinheit (SE) führt eine Suche in einem Adresssuchraum durch und sendet eine Suchadresse, die den Adresssuchraum begrenzt,
- C.) jeder Busteilnehmer (BT1-BT4), dessen zufällig erzeugte Adresse in dem Adresssuchraum liegt, sendet auf das Signal hin eine Antwort an die Steuereinheit (SE),
- D.) die Steuereinheit (SE) verkleinert den Adresssuchraum und führt die Schritte B.) bis D.) durch, bis im Schritt C.) nur ein Busteilnehmer (BT4) antwortet,
**dadurch gekennzeichnet, dass**
- in Schritt C.) jeder Busteilnehmer (BT1-BT4) mit seiner Antwort eine Adressdifferenzinformation sendet, die angibt, wie weit seine Adresse von der Suchadresse entfernt ist, und
- die Steuereinheit (SE) die zufällig erzeugte Adresse des einen Busteilnehmers (BT4) aus der Suchadresse und der Adressdifferenzinformation ermittelt und dem einen Bussteilnehmer (BT4) eine weitere Adresse zuweist,
wobei der Bus ein DALI- oder DSI-Bus ist, und wobei die weitere Adresse eine DALI- oder DSI-Kurzadresse ist.

2. Adressierungsverfahren nach Anspruch 1, wobei die Steuereinheit (SE) die Suche nach dem Busteilnehmer (BT4) mit der kleinsten oder größten zufällig erzeugte Adresse durchführt.

3. Adressierungsverfahren nach einem der vorgehenden Ansprüche, wobei jeder Busteilnehmer (BT1-BT4) einen Zufalls- oder Pseudozufallszahlengenerator aufweist und damit die zufällig erzeugte Adresse erzeugt.

4. Adressierungsverfahren nach einem der vorgehenden Ansprüche, wobei die Steuereinheit (SE) die Suchadresse in Schritt D.), wenn die Steuereinheit (SE) keine Antwort empfängt vergrößert.

5. Adressierungsverfahren nach einem der vorgehenden Ansprüche, wobei die zufällig erzeugte Adresse aus mehreren, insbesondere drei Bytes (HI, MI, LO) besteht, und wobei die Steuereinheit (SE) die Schritte B.) bis D.) für jedes Byte (HI, MI, LO) durchführt.

6. Adressierungsverfahren nach einem der vorgehenden Ansprüche, wobei die Antwort eine Typinformation aufweist, die angibt, für welches Byte (HI, MI, LO) die Adressdifferenzinformation gilt.

7. Adressierungsverfahren nach einem der vorgehenden Ansprüche, wobei die Busteilnehmer (BT1-BT4) Sensoren und/oder Aktuatoren sind.

8. Adressierungsverfahren nach einem der vorgehenden Ansprüche, wobei das Signal ein Broadcast-Signal ist, das insbesondere an alle Busteilnehmer gesendet wird.

9. Adressierungsverfahren nach einem der vorgehenden Ansprüche, wobei die Steuereinheit (SE) unterscheidet ob keine Antwort oder ob die Antwort von einem oder mehreren Busteilnehmern empfangen wurde.

10. Steuereinheit (SE) für Busteilnehmer (BT1-BT4) eines Busses für Gebäudetechnikgeräte, insbesondere Betriebsgeräte für Leuchtmittel, wobei
- die Steuereinheit (SE) mit den Busteilnehmern (BT1-BT4) über den Bus verbunden ist und dazu eingerichtet ist, eine Suche in einem Adresssuchraum in einem Schritt A.) durchzuführen und eine Suchadresse, die den Adresssuchraum begrenzt, zu senden und eine Antwort von jedem Busteilnehmer (BT1-BT4) zu empfangen, dessen zufällig erzeugte Adresse in dem Adresssuchraum liegt, und die weiter dazu eingerichtet ist, den Adresssuchraum in einem Schritt B.) zu verkleinern und die Schritte A.) bis B.) durchzuführen, bis nur ein Busteilnehmer (BT4) antwortet,
**dadurch gekennzeichnet, dass**
- die Steuereinheit (SE) dazu ausgelegt ist, in der Antwort eine Adressdifferenzinformation, die angibt, wie weit eine zufällig erzeugte Adresse eines Busteilnehmers von der Suchadresse entfernt ist, zu empfangen und auszuwerten, und
- die Steuereinheit (SE) dazu ausgelegt ist, die zufällig erzeugte Adresse des einen Busteilnehmers (BT4) aus der Suchadresse und der Adressdifferenzinformation zu ermitteln und dem Bussteilnehmer (BT4) eine weitere Adresse zuzuweisen, wobei der Bus ein DALI- oder DSI-Bus ist, und wobei die weitere Adresse eine DALI- oder DSI-Kurzadresse ist.

11. Busteilnehmer (BT1), insbesondere ein Betriebsgerät für Leuchtmittel, wobei
der Busteilnehmer (BT) über den Bus mit wenigstens einer Steuereinheit (SE) verbunden ist und dazu eingerichtet ist, sich intern eine zufällig erzeugte Adresse zuzuweisen oder eine solche von extern zu empfangen und sich zuzuweisen, und auf ein Signal hin, aufweisend eine Suchadresse, die einen Adresssuchraum begrenzt, eine Antwort an die Steuereinheit (SE) zu senden, wenn die zufällig erzeugte Adresse in dem Adresssuchraum liegt,
**dadurch gekennzeichnet, dass**
der Busteilnehmer (BT4) dazu eingerichtet ist, mit seiner Antwort eine Adressdifferenzinformation an die Steuereinheit (SE) zu senden, die angibt, wie weit seine zufällig erzeugte Adresse von der Suchadresse entfernt ist, und
der Busteilnehmer (BT4) dazu eingerichtet ist, von der Steuereinheit eine weitere Adresse zugewiesen zu bekommen, wobei der Bus ein DALI- oder DSI-Bus ist, und wobei die weitere Adresse eine DALI- oder DSI-Kurzadresse ist.

12. Bussystem (1) aufweisend mehrere Busteilnehmer (BT1-BT4) für Gebäudetechnikgeräte, insbesondere Betriebsgeräte für Leuchtmittel, wobei
die Busteilnehmer (BT1-BT4) über den Bus mit wenigstens einer Steuereinheit (SE) verbunden und dazu ausgelegt sind, sich in einem Schritt A.) jeweils intern eine zufällig erzeugte Adresse zuzuweisen oder mit einer solchen von extern versehen zu werden,
die Steuereinheit (SE) dazu eingerichtet ist, in einem Schritt B.) eine Suche in einem Adresssuchraum durchzuführen und eine Suchadresse zu senden, die den Adresssuchraum begrenzt, wobei
jeder Busteilnehmer (BT1-BT4), dessen zufällig erzeugte Adresse in dem Adresssuchraum liegt, dazu vorgesehen ist, auf das Signal hin in einem Schritt C.) eine Antwort an die Steuereinheit (SE) zu senden, und wobei
die Steuereinheit (SE) weiter dazu eingerichtet ist, den Adresssuchraum in einem Schritt D.) zu verkleinern und die Schritte B.) bis D.) durchzuführen, bis im Schritt C.) nur ein Busteilnehmer (BT4) antwortet,
**dadurch gekennzeichnet, dass**
jeder Busteilnehmer (BT1-BT4) dazu eingerichtet ist, in Schritt C) mit seiner Antwort eine Adressdifferenzinformation zu senden, die angibt, wie weit seine Adresse von der Suchadresse entfernt ist, und
die Steuereinheit (SE) dazu ausgelegt ist, die zufällig erzeugte Adresse des einen Busteilnehmers (BT4) aus der Suchadresse und der Adressdifferenzinformation zu ermitteln und dem Bussteilnehmer eine weitere Adresse zuzuweisen,
wobei der Bus ein DALI- oder DSI-Bus ist, und wobei die weitere Adresse eine DALI- oder DSI-Kurzadresse ist.

## Claims

1. An addressing method for bus subscribers (BT1-BT4) of a bus for building technology devices, in particular operating devices for illumination means, wherein the bus subscribers are connected to at least one control unit (SE) via the bus, having the steps:
- A.) the bus subscribers (BT1-BT4) are assigned in each case internally a randomly generated address or are provided externally with such an address,
- B.) the control unit (SE) carries out a search in the address search space and sends a search address, which limits the address search space,
- C.) each bus subscriber (BT1-BT4), whose randomly generated address is in the address search space, sends an answer to the control unit (SE) in response to the signal,
- D.) the control unit (SE) reduces the address search space and carries out the steps B.) to D.), until in step C.) only one bus subscriber (BT4) answers,
**characterized in that**
- in step C.) each bus subscriber (BT1-BT4) sends difference information with his answer address, which indicates, how far away his address is from the search address, and
- the control unit (SE) identifies the randomly generated address of the one bus subscriber (BT4) from the search address and the address difference information and assigns a further address to the one bus subscriber (BT4),
wherein the bus is a DALI- or DSI-bus, and wherein the further address is a DALI- or DSI-short address.

2. An addressing method according to Claim 1, wherein the control unit (SE) carries out the search for the bus subscriber (BT4) with the smallest or largest randomly generated address.

3. An addressing method according to any one of the preceding claims, wherein each bus subscriber (BT1-BT4) has a random or pseudo-random number generator and thus generates the randomly generated address.

4. An addressing method according to any one of the preceding claims, wherein the control unit (SE) increases the search address in step D.), if the control unit (SE receives no answer.

5. An addressing method according to any one of the preceding claims, wherein the randomly generated address consists of several, in particular three bytes (HI, MI, LO), and wherein the control unit (SE) carries out steps B.) to D.) for each byte (HI, MI, LO).

6. An addressing method according to any one of the preceding claims, wherein the answer has type information, which indicates, to which byte (HI, MI, LO) the address difference information applies.

7. An addressing method according to any one of the preceding claims, wherein the bus subscribers (BT1-BT4) are sensors and/or actuators.

8. An addressing method according to any one of the preceding claims, wherein the signal is a broadcast signal, which is sent in particular to all bus subscribers.

9. An addressing method according to any one of the preceding claims, wherein the control unit (SE) makes a distinction depending on whether no answer or whether the answer of one or several bus subscribers was received.

10. A control unit (SE) for bus subscribers (BT1-BT4) of a bus for building technology devices, in particular operating devices for illumination means, wherein
- the control unit (SE) is connected to the bus subscribers (BT1-BT4) via the bus and is configured to carry out a search in an address search space in a step A.) and to send a search address, which limits the address search space, and to receive an answer from each bus subscriber (BT1-BT4), whose randomly generated address is in the address search space, and which is further configured to reduce the address search space in a step B.) and to carry out steps A.) to B.), until only one bus subscriber (BT4) answers, **characterized in that**
- the control unit (SE) is designed to receive and to evaluate address difference information in the answer, which indicates, how far away a randomly generated address of a bus subscriber is from the search address, and
- the control unit (SE) is designed to identify the randomly generated address of the one bus subscriber (BT4) from the search address and the address difference information and to assign a further address to the bus subscriber (BT4), wherein the bus is a DALI- or DSI-bus, and wherein the further address is a DALI- or DSI-short address.

11. A bus subscriber (BT1), in particular an operating device for illumination means, wherein
the bus subscriber (BT) is connected via the bus with at least one control unit (SE) and is configured to internally assign a randomly generated address or to receive and to be assigned such an address externally, and in response to a signal, having a search address, which limits an address search space, to send an answer to the control unit (SE), if the randomly generated address is in the address search space,
**characterized in that**
the bus subscriber (BT4 is configured to send address difference information to the control unit (SE) with its answer, which indicates, how far away its randomly generated address is from the search address, and the bus subscriber (BT4) is configured to receive a further address assigned by the control unit, wherein the bus is a DALI- or DSI-bus, and wherein the further address is a DALI- or DSI-short address.

12. A bus system (1) having several bus subscribers (BT1-BT4) for building technology devices, in particular operating devices for illumination means, wherein
the bus subscribers (BT1-BT4) are connected via the bus with at least one control unit (SE) and are designed to assign a randomly generated address in each case internally in a step A.) or to be provided with such an address externally,
the control unit (SE) is configured to carry out a search in an address search space in a step B.) and to send a search address, which limits the address search space, wherein
each bus subscriber (BT1-BT4), whose randomly generated address is in the address search space, is provided an answer to send to the control unit (SE) in response to the signal in a step C.), and wherein
the control unit (SE) is further configured, to reduce the address search space in a step D.) and to carry out the steps B.) to D.), until in step C.) only one bus subscriber (BT4) answers,
**characterized in that**
each bus subscriber (BT1-BT4) is configured to send address difference information with its answer in step C.), which indicates, how far its address is away from the search address, and
the control unit (SE) is designed to identify the randomly generated address of the one bus subscriber (BT4) from the search address and the address difference information and to assign a further address to the bus subscriber,
wherein the bus is a DALI- or DSI-bus, and wherein the further address is a DALI- or DSI-short address.

## Revendications

1. Procédé d'adressage pour utilisateurs de bus (BT1-BT4) d'un bus pour appareils utilisés dans le secteur du bâtiment, en particulier des appareils de commande pour moyens d'éclairage, les utilisateurs de bus étant raccordés via le bus à au moins une unité de commande (SE), présentant les étapes suivantes :
- A.) les utilisateurs de bus (BT1-BT4) s'attribuent respectivement en interne une adresse générée de façon aléatoire ou sont munis en externe d'une telle adresse,
- B.) l'unité de commande (SE) effectue une recherche dans un espace de recherche d'adresses et envoie une adresse de recherche qui limite l'espace de recherche d'adresses,
- C.) chaque utilisateur de bus (BT1-BT4) dont l'adresse générée de façon aléatoire se situe dans l'espace de recherche d'adresses envoie en réaction au signal une réponse à l'unité de commande (SE),
- D.) l'unité de commande (SE) réduit l'espace de recherche d'adresses et effectue les étapes B.) à D.) jusqu'à ce que seul un utilisateur de bus (BT4) réponde dans l'étape C.), **caractérisé en ce que**,
- dans l'étape C.), chaque utilisateur de bus (BT1-BT4) envoie avec sa réponse une information de différence d'adresse qui indique dans quelle mesure son adresse est éloignée de l'adresse de recherche, et
- à partir de l'adresse de recherche et de l'information de différence d'adresse, l'unité de commande (SE) détermine l'adresse générée de façon aléatoire de l'utilisateur de bus (BT4) et attribue une autre adresse à l'utilisateur de bus (BT4),
le bus étant un bus DALI ou DSI, et l'autre adresse étant une adresse abrégée DALI ou DSI.

2. Procédé d'adressage selon la revendication 1, l'unité de commande (SE) effectuant la recherche de l'utilisateur de bus (BT4) ayant la plus petite ou la plus grande adresse générée de façon aléatoire.

3. Procédé d'adressage selon l'une des revendications précédentes, chaque utilisateur de bus (BT1-BT4) présentant un générateur de nombres aléatoire ou pseudo-aléatoires et génère l'adresse générée de façon aléatoire.

4. Procédé d'adressage selon l'une des revendications précédentes, l'unité de commande (SE) agrandissant l'adresse de recherche dans l'étape D.) si l'unité de commande (E) ne reçoit pas de réponse.

5. Procédé d'adressage selon l'une des revendications précédentes, l'adresse générée de façon aléatoire se composant de plusieurs, en particulier de trois octets (HI, MI, LO), et l'unité de commande (SE) effectuant les étapes B.) à D.) pour chaque octet (HI, MI, LO).

6. Procédé d'adressage selon l'une des revendications précédentes, la réponse présentant une information de type qui indique pour quel octet (HI, MI, LO) l'information de différence d'adresse est valide.

7. Procédé d'adressage selon l'une des revendications précédentes, les utilisateurs de bus (BT1-BT4) étant des capteurs et/ou des actionneurs.

8. Procédé d'adressage selon l'une des revendications précédentes, le signal étant un signal broadcast qui est en particulier envoyé à tous les utilisateurs de bus.

9. Procédé d'adressage selon l'une des revendications précédentes, l'unité de commande (SE) distinguant si aucune réponse n'a été reçue ou bien si la réponse a été reçue par un ou plusieurs utilisateurs de bus.

10. Unité de commande (SE) pour des utilisateurs de bus (BT1-BT4) d'un bus pour des appareils utilisés dans le secteur du bâtiment, en particulier des appareils de commande pour moyens d'éclairage
- l'unité de commande (SE) étant raccordée aux utilisateurs de bus (BT1-BT4) via le bus et étant agencée pour effectuer une recherche dans un espace de recherche d'adresses dans une étape A.) et pour envoyer une adresse de recherche qui limite l'espace de recherche d'adresses et pour recevoir une réponse de chaque utilisateur de bus (BT1-BT4) dont l'adresse générée de façon aléatoire se situe dans l'espace de recherche d'adresses, et qui est en outre agencée pour réduire l'espace de recherche d'adresses dans une étape B.) et pour effectuer les étapes A.) à B.) jusqu'à ce que seul un utilisateur de bus (BT4) réponde, **caractérisée en ce que**
- l'unité de commande (SE) est conçue pour recevoir et analyser dans la réponse une information de différence d'adresse qui indique dans quelle mesure une adresse générée de façon aléatoire d'un utilisateur de bus est éloignée de l'adresse de recherche, et
- l'unité de commande (SE) est conçue pour déterminer l'adresse générée de façon aléatoire d'un utilisateur de bus (BT4) à partir de l'adresse de recherche et de l'information de différence d'adresse et pour attribuer à l'utilisateur de bus (BT4) une autre adresse, le bus étant un bus DALI ou DSI, et l'autre adresse étant une adresse abrégée DALI ou DSI.

11. Utilisateur de bus (BT1), en particulier un appareil de commande pour des moyens d'éclairage,
l'utilisateur de bus (BT) étant raccordé via le bus à au moins une unité de commande (SE) et étant agencé pour s'attribuer en interne une adresse générée de façon aléatoire ou pour recevoir et s'attribuer en externe une telle adresse, et pour, en réaction à un signal présentant une adresse de recherche qui limite un espace de recherche, envoyer une réponse à l'unité de commande (SE) si l'adresse générée de façon aléatoire se situe dans l'espace de recherche d'adresses,
**caractérisé en ce que**
l'utilisateur de bus (BT4) est agencé pour, avec sa réponse, envoyer à l'unité de commande (SE) une information de différence d'adresse qui indique dans quelle mesure son adresse générée de façon aléatoire est éloignée de l'adresse de recherche, et l'utilisateur de bus (BT4) est agencé pour se voir attribuer une autre adresse de la part de l'unité de commande, le bus étant un bus DALI ou DSI, et l'autre adresse étant une adresse abrégée DALI ou DSI.

12. Système de bus (1) présentant plusieurs utilisateurs de bus (BT1-BT4) pour des appareils utilisés dans le secteur du bâtiment, en particulier des appareils de commande pour moyens d'éclairage,
les utilisateurs de bus (BT1-BT4) étant raccordés via le bus à au moins une unité de commande (SE) et étant conçus pour, dans une étape A.), s'attribuer respectivement en interne une adresse générée de façon aléatoire ou pour être munis en externe d'une telle adresse,
l'unité de commande (SE) étant agencée pour, dans une étape B.), effectuer une recherche dans un espace de recherche d'adresses et pour envoyer une adresse de recherche qui limite l'espace de recherche d'adresses,
chaque utilisateur de bus (BT1-BT4) dont l'adresse générée de façon aléatoire se situe dans l'espace de recherche d'adresses étant prévu pour, en réaction au signal, envoyer dans une étape C.) une réponse à l'unité de commande (SE), et
l'unité de commande (SE) étant en outre agencée pour réduire l'espace de recherche d'adresses dans une étape D.) et pour effectuer les étapes B) à D.) jusqu'à ce que dans l'étape C.) seul un utilisateur de bus (BT4) réponde,
**caractérisé en ce que**
chaque utilisateur de bus (BT1-BT4) est agencé pour, dans l'étape C), envoyer avec sa réponse une information de différence d'adresse qui indique dans quelle mesure son adresse est éloignée de l'adresse de recherche, et
l'unité de commande (SE) est conçue pour déterminer, à partir de l'adresse de recherche et l'information de différence d'adresse, l'adresse générée de façon aléatoire d'un utilisateur de bus (BT4) et pour attribuer à l'utilisateur de bus une autre adresse,
le bus étant un bus DALI ou DSI, et l'autre adresse étant une adresse abrégée DALI ou DSI.
